(19) Europäisches Patentamt
European Patent Office
Office européen des brevets

(11) **EP 4 328 594 A1**

(12) **EUROPEAN PATENT APPLICATION**

(43) Date of publication:
**28.02.2024 Bulletin 2024/09**

(21) Application number: **22275117.4**

(22) Date of filing: **23.08.2022**

(51) International Patent Classification (IPC):
**G01P 5/00** *(2006.01)*       **G01P 13/02** *(2006.01)*
**G06N 3/02** *(2006.01)*       **B64D 43/02** *(2006.01)*
**G01C 23/00** *(2006.01)*

(52) Cooperative Patent Classification (CPC):
**G01C 23/00; B64D 43/02; G06N 3/042; G06N 3/09;**
**G06N 3/084**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **BAE SYSTEMS plc**
**London SW1Y 5AD (GB)**

(72) Inventor: **The designation of the inventor has not yet been filed**

(74) Representative: **BAE SYSTEMS plc**
**Group IP Department**
**Warwick House**
**P.O. Box 87**
**Farnborough Aerospace Centre**
**Farnborough Hampshire GU14 6YU (GB)**

(54) **AIR DATA ESTIMATION IN AIRCRAFT**

(57)     Air data estimation involves determining values of air data parameters such as airspeed, altitude, angle of attack and angle of sideslip. Accurate determination of air data parameter values is crucial to enable accurate control of an aircraft. An aircraft has an air data estimator comprising a machine learning model having been trained to predict air data parameter values from input values. The air data estimator is operable in real time on input values, where the input values are sensor data only from sensors internal to the aircraft or data derived from such sensor data

FIG. 1

## Description

FIELD

The present invention relates to aircraft and in particular, air data estimation in such aircraft.

BACKGROUND

Air data estimation involves determining values of air data parameters such as airspeed, pressure altitude, angle of attack and angle of sideslip. Accurate determination of air data parameter values is crucial to enable accurate control of an aircraft. Air data parameter values are typically displayed to a pilot and are also made available to avionics systems within an aircraft. In an example, an altitude hold capability of an autopilot system in an aircraft requires accurate altitude values as input. In an example, angle of attack and angle of sideslip are used by an aircraft's flight control system to automatically improve aircraft stability and handling.

SUMMARY

According to an aspect of the present invention, there is provided an aircraft comprising :

an air data estimator comprising a machine learning model having been trained to predict air data parameter values from input values;
the air data estimator operable in real time on input values, where the input values are sensor data only from sensors internal to the aircraft or data derived from such sensor data.

Preferably the aircraft comprises a flight control system and wherein the input values comprise values from the flight control system.

Preferably the input values comprise static pressure values.

Preferably the input values from the flight control system comprise control surface positions.

Preferably the input values comprise engine data from the digital engine control unit.

Preferably the aircraft comprises a vehicle management system, and wherein the input values comprise mass of the aircraft determined by the vehicle management system.

Preferably the input values comprise centre of gravity of the aircraft determined by the vehicle management system.

Preferably the aircraft comprises a navigation sub system and inertial measurement unit, which provides attitude data of the aircraft within the input values.

Preferably the navigation sub system and inertial measurement unit provides manoeuvre rates within the input values.

Preferably the navigation sub system and inertial measurement unit provides acceleration of the aircraft within the input values.

Preferably the air data parameter values comprise any one or more of: angle of attack, sideslip, dynamic pressure, static pressure.

Preferably the air data parameter values comprise static pressure and dynamic pressure and wherein the aircraft comprises an output parameter calculator configured to compute altitude of the aircraft and airspeed of the aircraft from the static pressure and dynamic pressure parameter values predicted by the air data estimator.

Preferably the machine learning model is a neural network comprising an input layer, an output layer and a maximum of two internal layers.

Preferably the neural network is a feed forward neural network without recurrence.

Preferably the neural network is implemented using hardware circuitry comprising a graphics processing unit or parallel processing device.

Preferably the machine learning model has been trained using labelled training data computed by randomly selecting values from a flight envelope of the aircraft and using the selected values to simulate the input values.

According to an aspect of the present invention, there is provided a method performed in an aircraft, the method comprising :
using an air data estimator comprising a machine learning model to predict air data parameter values from input values in real time; where the input values are sensor data only from sensors internal to the aircraft or data derived from such sensor data.

Preferably the input values comprise: engine data, control surface position, static pressure, mass, centre of gravity, attitudes, manoeuvre rates, accelerations.

Preferably the method comprises concatenating the input values into a vector and inputting the vector to the machine learning model.

Preferably the method comprises normalizing the vector before inputting the vector to the machine learning model.

Preferably the method comprises unnormalizing output values output from the machine learning model.

According to an aspect of the present invention, there is provided a computer implemented air data estimator comprising a machine learning model to predict air data parameter values from input values in real time; where the input values are from avionics internal to an aircraft such that the aircraft does not need air data sensors mounted on an external surface of the aircraft.

Preferably the air data estimator is implemented using hardware circuitry and wherein the machine learning model is a neural network having less than three internal layers.

According to an aspect of the present invention, there is provided a computer-implemented method of training an air data estimator to predict values of air data parameters of an aircraft, the method comprising: using supervised training to train a neural network in the air data estimator, the supervised training using training data pairs, each training data pair comprising ground truth values of the air data parameters selected from a flight envelope of the aircraft, and corresponding simulated values from avionics in the aircraft, the simulated values computed using stored empirical data about engines of the aircraft and empirical data about the aircraft obtained from wind tunnel testing, and rules of computational fluid dynamics.

Preferably the neural network comprises a plurality of neural networks one for each parameter to be predicted.

BRIEF DESCRIPTION OF THE FIGURES

Embodiments of the invention will now be described by way of example only with reference to the figures, in which:

Figure 1 shows an aircraft and has a schematic of various avionics in the aircraft including an air data estimator for estimating air data parameter values;
Figure 2 shows an aircraft experiencing aerodynamic, inertial and gravitational forces;
Figure 3 shows an example method of computing training data;
Figure 4 shows an example of an air data estimator;
Figure 5 shows an example of a neural network used in an air data estimator;
Figure 6a shows a flow diagram of an example method of training a neural network for use in an air data estimator;
Figure 6b shows a flow diagram of an example method of validating a neural network for use in an air data estimator;
Figure 7 shows a flow diagram of an example method of using an air data estimator in an aircraft;
Figure 8a is a graph of angle of side slip estimated by an air data estimator and ground truth angle of side slip;
Figure 8b is a graph of knots equivalent air speed estimated by an air data estimator and ground truth knots equivalent air speed; and
Figure 8c is a graph of angle of attack estimated by an air data estimator and ground truth angle of attack.

DETAILED DESCRIPTION

Conventional air data systems on aircraft generally use data from surface-mounted sensors measuring air pressures and air temperature, from which airspeed, altitude and ambient temperature are derived. Air flow detectors can also be fitted on aircraft as stall warning devices. Higher performance aircraft may also require sensors measuring air flow angles, from which angle of attack and angle of sideslip can be determined for use not only by the pilot but also the aircraft's flight control system to improve aircraft stability and handling.

Conventional air data probes are mounted on the aircraft forebody and are excrescences that are vulnerable to damage both on-ground and in-air and can become blocked with debris. External air data probes must also be heated to prevent ice accretion, or the accumulation of water. These sensors also create aerodynamic drag and can cause aerodynamic interference with other surface-mounted excrescences and even degrade engine air intake performance. Externally-mounted probes can also contribute significantly to the aircraft's radar signature. On high performance military aircraft, optimal external location of the air data sensors is often not possible: radar performance requirements may prevent mounting sensors on the radome; flight and mission sensors may compete for locations on the forebody and the position of the undercarriage, engine air inlets, and control surfaces, may also restrict air data sensor location. Furthermore, modern, high performance military aircraft mount multiple sensors on the forebody and integrating multiple air data sensors with them is often challenging. Therefore, the ability to determine air data without using external air data probes is highly desirable.

The inventors have developed a way to determine various air data parameters without using data from conventional air data sensors. Only sensor data from sensors internal to the aircraft, or derived from sensors internal to the aircraft is used. A machine learning model is used to predict air data parameter values in real time, that is, during flight of an aircraft so that the predicted air data parameter values are usable to control the aircraft during its flight. The technology is operable in any aircraft (including propeller aircraft) equipped with suitable inertial and flight control hardware as explained below. The air data estimator described herein is operable for both civil and military aircraft. There are advantages to implementing and air data estimation in both applications, but perhaps more so in the case of military aircraft where the installation of air data sensors is more challenging and the flight and manoeuvre envelopes are larger.

In air data, there is a need for both accuracy and redundancy. Having an air data estimator as described herein provides another source of air data that is largely independent of other air data sources.

It is not straightforward to develop a machine learning model which is operable to predict air data parameter values in real time, for use in an aircraft. This problem is particularly exacerbated in the case of military or jet combat aircraft. Jet combat aircraft are highly agile and are used for complex manoeuvres where values of air data parameters change rapidly and move between extremes. Combat aircraft are used in a range of environmental conditions which are more extreme than for commercial aircraft and experience greater turbulence than typical commercial aircraft.

A jet combat aircraft is a highly resource constrained apparatus. Space, power, weight and time are examples of resources which are scarce in the case of a jet combat aircraft. Thus deployment of a machine learning model for air data estimation in a jet combat aircraft faces the challenge of constrained resources.

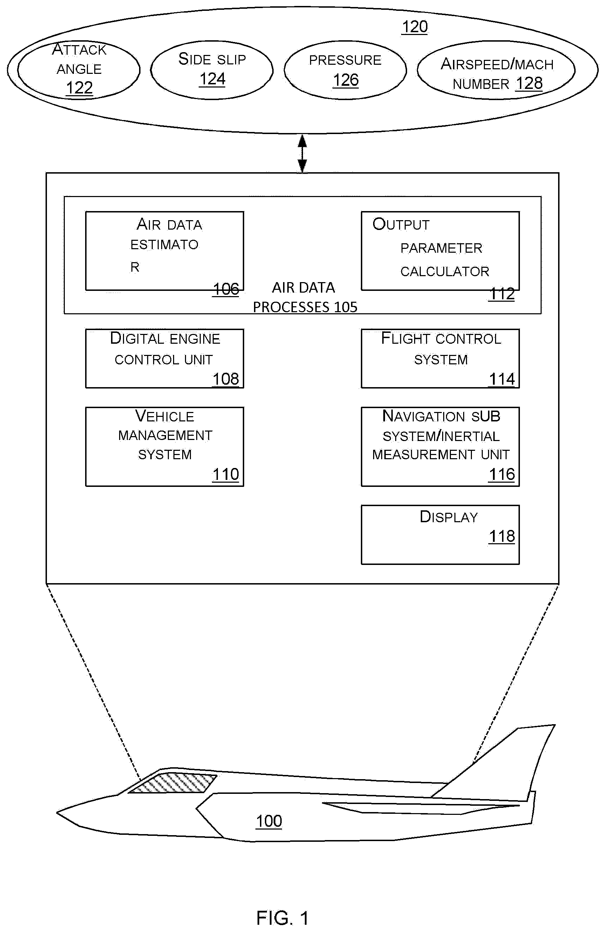

Figure 1 shows an aircraft 100 and has a schematic of various avionics in the aircraft including an air data estimator 106 for estimating air data parameter 120 values. The air data estimator 106 and an output parameter calculator 112 in the aircraft 100 output values of air data parameters 120. The air data estimator 106 and the output parameter calculator 112 are computer implemented and execute air data processes 105. In the example of figure 1 the air data parameters 120 comprise: angle of attack 122, sideslip 124, pressure altitude 126, airspeed 128. The air data estimator 106 and output parameter calculator 112 are able to compute values of the air data parameters 120 in real time without using air data sensors on an outer surface of the aircraft 100. This is achieved by using avionics inside the aircraft to provide values for input to a machine learning model in the air data estimator 106. The avionics may be existing avionics of the aircraft; that is, the avionics do not have to be modified for use with the air data estimator 106. The air data estimator 106 is computer implemented using any one or more of software, firmware, hardware. In an example the air data estimator 106 is a low power, compact, computer implemented component which is straightforward to deploy inside the aircraft.

The angle of attack 122 is the angle between a reference line of an aircraft and the oncoming flow.

Sideslip, also referred to as angle of sideslip is the angle between the direction in which an aircraft is pointing and the direction of the oncoming air.

Pressure altitude is a function of static pressure according to an agreed International Standard Atmosphere definition. Thus pressure altitude may be derived from corrected static pressure from the Air Data Estimator.

The airspeed may be any of: a knots equivalent airspeed which is a calibrated airspeed adjusted for compressibility effects, a calibrated airspeed. Calibrated airspeed (CAS) is a function of pitot minus static pressure and is the airspeed usually displayed to the pilot.

Equivalent Air Speed (EAS) is CAS corrected for air compressibility effects and is a function of dynamic pressure..Mach number is the ratio of true airspeed to the local speed of sound and can be calculated from pitot and static pressure. It may also be derived from static pressure and dynamic pressure. In cases where total temperature data is measured by probes installed in the engine air intake ducts and used in the airspeed computation, the airspeed is true airspeed. In some cases where a ratio of speeds is computed a Mach number is given.

Values of the air data parameters 120 computed using the air data estimator 106 and output parameter calculator 112 are optionally displayed at display 118 in the aircraft 100.

As mentioned above the avionics may be existing avionics inside the aircraft. Example avionics in figure 1 comprise: digital engine control unit 108, vehicle management system 110, flight control system 114, navigation sub system and inertial measurement unit 116. Note that one or more of the avionics in figure 1 are integrated together in some examples. In an example the flight control system 114 and the air data estimator 106 are integrated together.

Digital engine control unit 108 is avionics which monitors and automatically adjusts the aircraft's engine performance and related criteria throughout a flight. The digital engine control unit carries out electronic management of the engines for optimized engine performance and carries out engine status monitoring. The digital engine control unit 108 receives data from sensors in the aircraft engines. Each engine has an electronic control, mounted on the engine or engine fan case, drawing power from an engine alternator to receive engine data from sensors in the engine and engine system measuring engine data such as one or more of: vibration, fuel consumption, thrust, power usage, temperature, exhaust quantity, sound.

Vehicle management system 110 is avionics comprising a computer system which receives data from sensors in the aircraft monitoring an amount of fuel in the aircraft and a number of weapons in the aircraft. The vehicle management system outputs a current mass of the aircraft and a current centre of gravity of the aircraft. The aircraft's mass and centre of gravity are quantities which vary as fuel is burnt (or received, in the case of inflight refuelling) and weapons released. In some cases the vehicle management system 110 is part of a flight control system 114. More detail about a flight control system is now given. The vehicle management system 110 is able to carry out many other functions in some examples.

Flight control system 114 is an avionics system which operates control surfaces of the aircraft. The flight control system 114 operates the control surfaces either automatically (such as by issuing computer implemented instructions to stabilized the aircraft without the pilot's input) or using inputs from a human pilot manipulating cockpit controls in the aircraft. The control surfaces, such as ailerons, elevators, rudder, spoilers, flaps, slats, air brakes and control trimming surfaces are aerodynamic devices which are moveable to control an aircraft's flight attitude. In an example hinges or tracks are used to enable movement of a control surface to deflect an air stream passing over the control surface and cause rotation of the aircraft about an axis associated with the control surface. A flight control system has information about the positions of the control surfaces of the aircraft and is able to provide the control surface positions as values for input to the air data estimator 106. A flight control system can also have multiple air data sensors including one or more static pressure sensors integrated in a dedicated sensor/transducer unit. Thus, static pressure may be fed to the air data estimator whether it is implemented in a flight control computer or a dedicated air data computer. In an example the static pressure system of the aircraft comprises a static port which is a small aperture in the aircraft shell enabling sensing of the ambient atmospheric pressure during flight. The flight control system is able to provide a value of the measured static pressure as input to the air data estimator 106. In some cases the static pressure is fed directly from a dedicated pressure sensor unit to the air data estimator or to the flight control system. The static pressure data is digitised and provided by a digital data bus in some examples.

Navigation sub system and inertial measurement unit 116 comprises one or more accelerometers, gyroscopes or global positioning system sensors inside the aircraft. The navigation sub system and inertial measurement unit 116 are avionics and sensors within the aircraft which output one or more of: an attitude of the aircraft such as the orientation of the aircraft with respect to the horizon, manoeuvre rate of the aircraft, acceleration of the aircraft. Manoeuvre rate of an aircraft is an amount of a manoeuvre carried out per unit time. Consider a basic manoeuvre such as an increase in altitude; here the rate of the manoeuvre is the rate of change of altitude. Other types of manoeuvre are turns, that result in changes to the aircraft heading and accelerations, that result in changes to the aircraft speed and Mach number. Complex manoeuvres involve combinations of more than one type of basic manoeuvre.

The values of the air data parameters 120 which are computed by the air data estimator 106 and output parameter calculator 112 are displayed at display 118 in the aircraft 100 and/or are used by the avionics in the aircraft 100 such as flight control system 114, digital engine control unit 108, vehicle management system 110 and navigation sub system and inertial measurement unit 118.

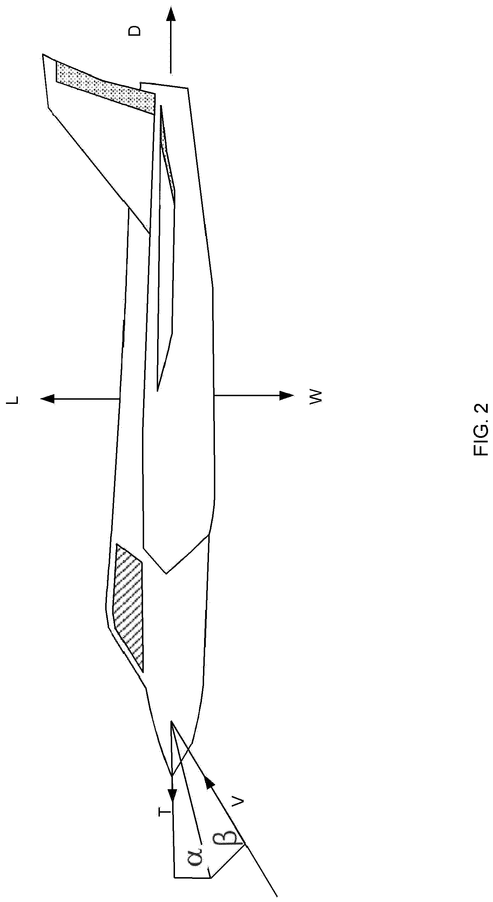

Figure 2 shows an aircraft experiencing aerodynamic, inertial and gravitational forces during flight (L denotes lift, W denotes gravity, D denotes drag). Angle of attack alpha and angle of sideslip beta are also indicated in figure 2 as well as air velocity vector V. The aircraft generates engine thrust T as indicated. When these forces are in balance the aircraft is said to be 'trimmed'. Engine thrust and control surface positions are constant in trimmed conditions, but they depend on the aircraft's mass and centre of gravity which vary as fuel is burnt (or received, in the case of in-flight refueling) and weapons released.

The physics of aircraft flight are embodied in Equations of Motion which take into account the aerodynamic, inertial and gravitational forces. Using data from the avionics mentioned in figure 1 information about the inertial and gravitational forces are known. The aerodynamic forces are a function of airspeed and onset airflow direction; the latter defined by angles of attack and sideslip. Aerodynamic forces are also affected by any configuration change that affects the external lines of the aircraft: for example, undercarriage deployment. Whether undercarriage deployment is invoked or not is known to the vehicle management system in the avionics of figure 1.

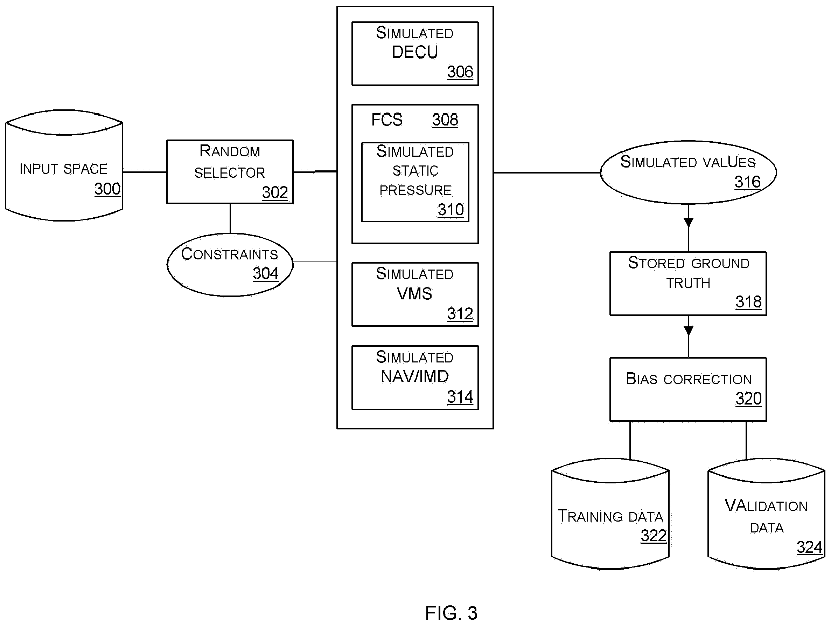

Figure 3 shows an example method of computing training data for training a machine learning model in the air data estimator 106. In the example of figure 3, the machine learning model is trained using supervised training although unsupervised or semi-supervised training may be used. Accuracy is measured in a quantitative manner using validation data as explained below and takes into account generalization ability. Generalization ability is assessed by ensuring the validation data points are sufficiently far from training set data points. This is implemented by splitting the dataset in batches / runs of (-3000 points) rather than pure random sampling. In some cases accuracy is also assessed in a qualitative manner using feedback from human pilots. Generalization ability is a measure of how well the machine learning model is able to predict values of the air data parameters from input values which were unrepresented in the training data.

In the case of supervised training labelled training data pairs are used where a training data pair is a set of values from the avionics in the aircraft at a specified time and a corresponding set of ground truth air data parameter values. The ground truth air data parameter values are ones which are known to be correct at the specified time. Hundreds of thousands or more training data pairs are used during training in order to achieve high accuracy of the machine learning model in the air data estimator. The training data pairs are obtained for a wide range of possible conditions of the aircraft such as different attitudes, air data velocities, environmental conditions such as turbulence, different internal conditions such as mass, engine state, centre of gravity, undercarriage deployment, control surface positions. By using a wide range of possible conditions of the aircraft it is possible to improve accuracy and generalization ability of the machine learning model.

It is not straightforward to obtain sufficient quantity and variety of training data pairs for training the machine learning model. One option is to fly the aircraft and record sets of values from the avionics in the aircraft and corresponding sets of empirical ground truth air data parameter values. In an example, empirical ground truth air data parameter values are measured using a flight test boom instrumented with air data sensors. However, it is extremely difficult to obtain sufficient variety of training data pairs by flying the aircraft and recording data since extremes of environmental conditions and/or extremes of attitudes and air velocity are difficult to achieve.

The inventors have developed a way of generating a large quantity and variety of training data pairs through use of simulation where the simulation is a computer simulation using an integrated flight control model of the aircraft dynamics and aerodynamics, engine performance and the flight control system. In an example, characteristics are measured in a wind tunnel or generated by a computational fluid dynamics solver. The resulting simulator is then used to generate training data.

The training data is generated in order to cover an input space 300 of the air data estimator. The input space is the range of every input parameter of the air data estimator.

As shown in figure 3 values from one or more of the avionics components in the aircraft are simulated for each of a range values of the air data parameters. Thus, for a particular set of simulated values 316 of the avionics components of the aircraft, there is a corresponding set of ground truth values 318 of the air data parameters. By repeating the simulation process for many sets of ground truth values of the air data parameters large quantities of training data 322 pairs are obtained.

A flight envelope of the aircraft is known and stored in the form of rules and/or limits in a database. The flight envelope is useful information about at least part of the input space 300. A design envelope of the aircraft is typically provided by the aircraft manufacturer and comprises Mach number, altitude and airspeed, together with acceleration and manoeuvre rate limits. Ideally the air data estimator is trained to function over the full design envelope. A flight envelope over which an aircraft is cleared to fly is within the design envelope in order to provide a margin of safety. The flight envelope is a range of altitudes, attitudes, velocities, accelerations which are possible to achieve using the aircraft.

A computer implemented selector 302, which is a random or pseudo random selector in some cases, selects a set of values of the air data parameters which are within the flight envelope 300. The computer implemented selector 302 optionally takes into account constraints 304 such that the set of values of the input parameters are selected from the input space 300 according to the constraints 304. An example of a constraint is a maximum acceleration (e.g. 9G) practical for experience by a human pilot.

In some cases the computer implemented selector 302 takes into account manoeuvre paths when selecting the set of values of the air data parameters. Random inputs are provided at high frequencies for random trajectories unlike traditional manoeuvres. Alternatively or in addition, one or more template manoeuvre paths are available to the random selector where a template manoeuvre path is flight control inputs over time. Template manoeuvre paths for turns, increase in altitude, decrease in altitude, acceleration, subsonic, sonic and supersonic velocities, banked turn, pitch up, and combinations of these are formed. The computer implemented selector 302 is configured to select a plurality of altitudes and attitudes along the trajectory and output corresponding ground truth air data parameters. By using extreme random manoeuvres it is possible to demonstrate the robustness of the air data estimator 106.

Once a set of air data parameter values has been selected, corresponding values from avionics in the aircraft are simulated. In an example there is one or more of: a simulation of 306 of a digital engine control unit 108, a simulation 308 of a flight control system, a simulation 312 of a vehicle management system and a simulation 314 of a navigation sub system and inertial measurement unit 116. One or more of these simulators may be combined into a single simulator in the flight control system simulator 308 rather than being separate entities as indicated in figure 3.

In some examples, a random input generator is used to generate values for flight controls for a specified duration. In an example, altitude and speed are varied in a grid manner to ensure coverage of those aspects.

In an example a simulation of 306 of a digital engine control unit comprises stored empirical data about engine performance determined from on-ground and flying test-beds. One or more engines of the type of aircraft to be used is tested on the ground or during flight to obtain sensor data measurements as would be obtained by the digital engine control unit in use. The stored empirical data comprises fuel consumption, thrust, power usage, temperature, exhaust quantity, sound. The simulation 306 of the digital engine control unit is able to take as input a set of values of the air data parameters and to return engine data from the stored empirical data. This is done by using rules about how to query the stored empirical data according to the ground truth air data parameter values.

In an example a simulation 312 of a vehicle management system comprises rules implemented in software which outputs a current mass of the aircraft and a current centre of gravity of the aircraft. The aircraft's mass and centre of gravity are quantities which vary as fuel is burnt (or received, in the case of in-flight refuelling) and weapons released. The simulation 312 of the vehicle management system uses rules to generate the values such as by using default values, selecting values according to rules or a model of fuel consumption by the aircraft over time, selecting values according to rules or a model of weapon deployment by an aircraft over time, selecting values according to rules or a model of in-flight refuelling.

In an example a simulation 314 of a navigation sub system and inertial measurement unit 116 comprises software which when given the ground truth air data parameter values computes one or more of: an attitude of the aircraft such as the orientation of the aircraft with respect to the horizon, manoeuvre rate of the aircraft, acceleration of the aircraft. Inertial data is generated in simulation 314 using a set of template manoeuvres at various conditions within a design envelope of the aircraft. The simulation 314 comprises one or more rules or look up tables such as for selecting the attitude of the aircraft from a range of values given the ground truth air data parameters. A template manoeuvre used by the selector 302 may also be used by simulation 314 to inform selection of the attitude.

Empirical data about the aircraft obtained from wind tunnel testing and/or rules of Computational Fluid Dynamics (CFD) are used to generate data for an aerodynamic dataset and air data corrections which are embedded into flight control model software.

In some cases the simulation comprises a software model of an inertial measurement unit which simulates measurement of acceleration of the aircraft taking into account noise in the inertial measurement unit. In some cases the simulation comprises rules for computing a simulated manoeuvre rate of the aircraft given the ground truth air data parameters and a template manoeuvre which was used by the selector 302.

In an example a simulation 308 of a flight control system comprises software which outputs positions of control surfaces of the aircraft as well as static pressure, when given as input a set of ground truth air data parameter values and manoeuvre demands. The simulation 308 of the flight control system uses a flight control model to simulate the motion of the aircraft from a trimmed condition through either a template manoeuvre or one involving random, but constrained pilot control inputs. The response of the aircraft is further constrained by the flight control system. In an example, the static pressure is computed by the simulation 308 according to a value of the altitude provided in the ground truth parameter values and taking into account position errors and noise.

In some examples turbulence is taken into account by the simulated flight control system and/or simulated navigation sub system and inertial measurement unit. In these examples a wind gust model is used by the simulators such as a Dryden wind turbulence model or other wind gust model which simulates both vertical and lateral gusts. In some examples the turbulence was scaled to reflect maximum wind speeds (jet stream) and consequent extreme turbulence. Randomly selected amounts of wind turbulence for both vertical and lateral gusts are simulated and taken into account by the simulators.

As indicated in figure 3 simulated values 316 are computed. One set of simulated values is a plurality of simulated values (representing the aircraft state at a particular time or time interval) to be concatenated into a single vector and input to the machine learning model in the air data estimator. The process of figure 3 repeats to simulate many tens or hundreds of thousands of sets of simulated values. Each set of simulated values has a corresponding set of ground truth air data parameter values.

A bias correction 320 is optionally carried out where there is an uneven distribution of the output. Uneven distribution of the output occurs where the neural network model is inherently biased to predict the more frequent values. Bias correction through loss weights allows this to be mitigated.

The process of figure 3 generates data pairs, where a data pair is a set of simulated values from avionics in the aircraft and a corresponding set of air data parameter values. A first portion of the data pairs generated using the process of figure 3 is stored in a training data store 322. A second portion of the data pairs generated using the process of figure 3 is stored in a validation data store 324. The validation data pairs are different from the training data pairs as they are taken from completely separate training runs. There are many more data pairs in the training data store 322 than in the validation data store 324.

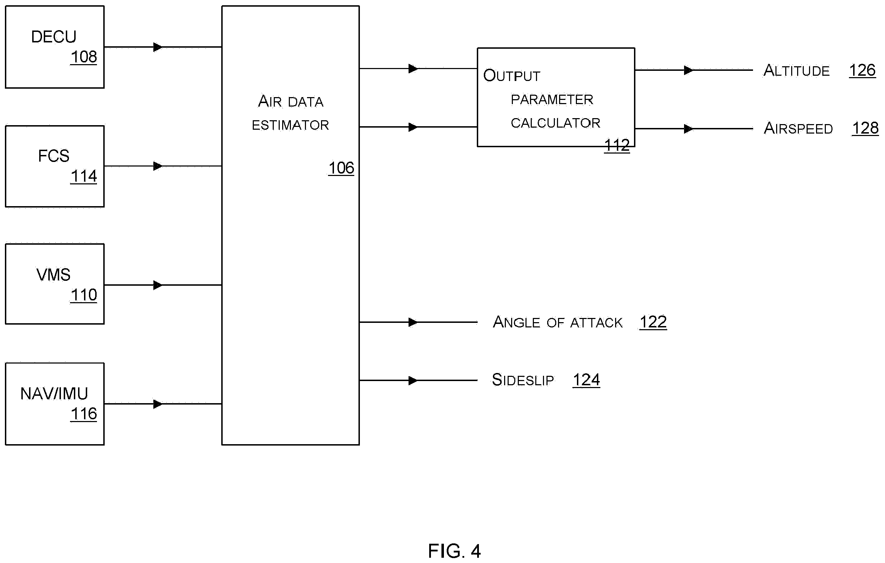

Figure 4 shows an example of an air data estimator 106 which is a machine learning model such as a neural network, random decision forest, support vector machine, or other machine learning model. In the examples described herein the machine learning model is a neural network although the skilled person understands that equivalent machine learning models may be used in place of the neural network.

The air data estimator 106 receives inputs from one or more of: a digital engine control unit (DECU) 108, a flight control system 114, a vehicle management system 110, a navigation sub system and inertial measurement unit 116. In one example the DECU 108 sends engine data to the air data estimator. The flight control system 114 sends positions of control surfaces of the aircraft as well as static pressure of the aircraft to the air data estimator. The vehicle management system 110 sends a mass and a centre of gravity of the aircraft to the air data estimator 106. The navigation sub system and inertial measurement unit sends one or more of: an attitude of the aircraft, a manoeuvre rate, an acceleration of the aircraft to the air data estimator 106.

The air data estimator outputs a prediction of the angle of attack 122, a prediction of the angle of sideslip 124, a prediction of the static pressure and a prediction of the dynamic pressure. The prediction of the static pressure and the prediction of the dynamic pressure are input to an output parameter calculator 112. The output parameter calculator 112 computes a predicted pressure 126 of the aircraft and a predicted airspeed 128 of the aircraft. The output parameter calculator 122 is implemented in any one or more of: software, hardware, firmware. The output parameter calculator computes the predicted pressure 126 from the static pressure and the defined relationship between static pressure and pressure altitude. In an example, the output parameter calculator computes the predicted airspeed 128 using the predicted dynamic pressure inserted in the following equation:

$$\text{Dynamic pressure} = \frac{1}{2}\rho\,v^2$$

Which is expressed in words as dynamic pressure equals one half of the air density times the square of the air speed. The air density is known standard sea level air density corrected according to the predicted altitude.

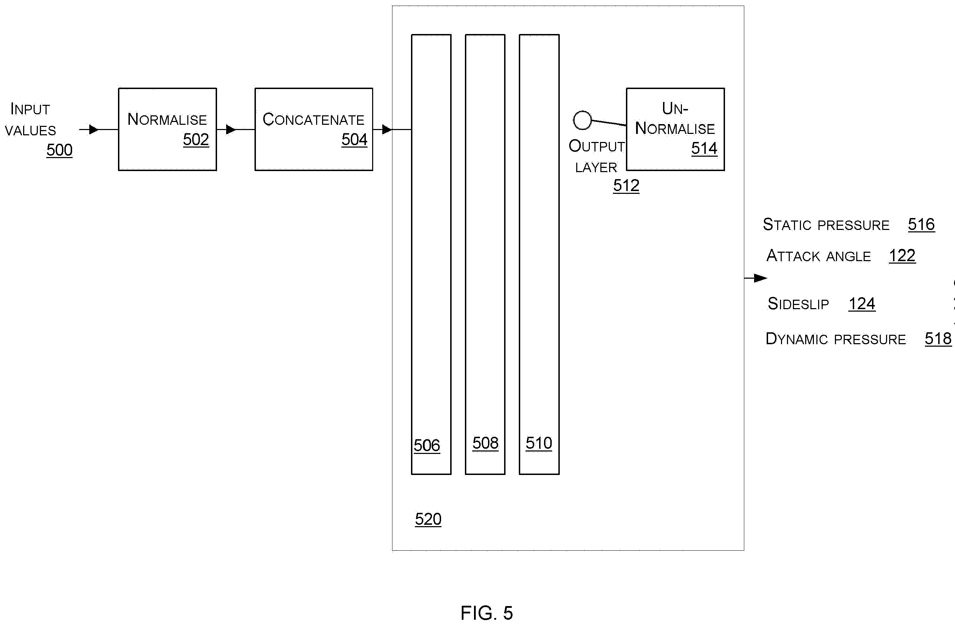

Figure 5 shows an example of a neural network architecture used in an air data estimator 106. In the example of figure 5 there is one neural network 520 shown in box 5 although in practice there are four such neural networks each receiving the same input from the concatenate operation 504. Using separate neural networks is found to improve the ability to tune and so improve accuracy.

In the example of figure 5 each neural network 520 has four layers, an input layer 506, two hidden layers 508, 510 and an output layer 512. The layers are fully connected and each neural network 520 is a feed forward neural network. Note that in other examples more than two internal layers are used with increased regularisation.

The input layer has at least x nodes where x is a number of input values 500 from the avionics in the aircraft. In an example the input values are engine data comprising thrust, a static pressure, control surface positions, aircraft mass, aircraft centre of gravity, attitude, manoeuvre rate, acceleration. In an example where there are 12 control surfaces there are 20 input values and 20 nodes in input layer 506. The skilled person appreciates that this example is not intended to be limiting and that other numbers of nodes are used in the input layer according to the number of input values being used.

The input values are normalised in some cases by scaling them independently using min-max normalisation.

The normalised input values are concatenated 504 into a single vector. Using concatenation into a single vector is found to give accurate results as compared with alternative approaches of grouping the input values into a plurality of separate input vectors.

In some examples, the hidden layers 508 and 510 have the same number of nodes as the input layer 506 and as mentioned are fully connected layers. Note that it is not essential to have the same number of nodes in hidden layers 508 and 510 as in the input layer. In some examples, dropout layers are used as well when more than two hidden layers are used to arrive at a similar functionality.

The output layer 512 has a single node for the parameter to be predicted. Each neural network 520 outputs a different parameter. In an example, there is one neural network to predict static pressure, one to predict attack angle 122, one to predict sideslip 124 and one to predict dynamic pressure 518.

The values at the nodes of the output layer 512 are un-normalised 514 using a reverse of the normalization applied at operation 502. The result is a predicted value of static pressure 516, a predicted value of dynamic pressure 518, a predicted value of attack angle 122, and a predicted value of sideslip 124.

Each node of the neural network has an activation which defines how a weighted sum of inputs to the node is transformed into an output. Any suitable non linear activation function is used such as tanh or rectified linear units for the input and hidden layers and linear activation for the output layer.

In another example the arrangement of figure 5 is modified so that there is only one neural network and the output layer has one output node per output parameter. The skilled person appreciates that other neural network architectures may be used.

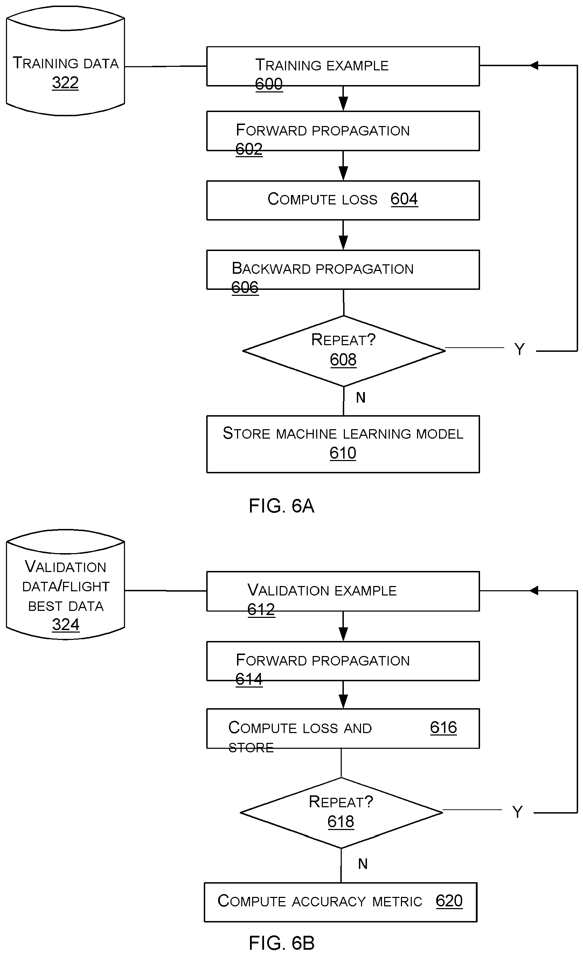

Figure 6a shows a flow diagram of an example method of training a neural network for use in an air data estimator. Training data 322 is available such as by having been computed using the process of figure 3. The training data comprises tens or hundreds of thousands of training data pairs. Each training data pair comprises a set of ground truth values of the air data parameters 120 and a corresponding set of values (which may be simulated values or empirical values) from avionics in the aircraft.

The method of figure 6a is highly computationally intensive and so may be carried out in a distributed manner in the cloud. However, it is not essential to use distributed processing.

A training example 600 is taken which is a training data pair from training data 322. A set of values from avionics in the aircraft is taken from the training data pair and input to the neural network after having been normalised. The set of values is propagated forward through the neural network layers using forward propagation 602. Forward propagation comprises, at each node of a layer of the neural network, applying a function to the input values of the node and applying a weight of the node. The result of applying the function and weights and optionally a bias, is an output value which is fed forward to a node in a next layer of the neural network according to connections between the layers. The weights of the nodes are initially set to random values.

Forward propagation proceeds until the output layer of the neural network is reached. An output value of each node in the output layer is obtained and un-normalised. The un-normalised output values are compared with the corresponding ground truth values from the training data pair. The comparison is made by computing 604 a loss function such as a sum of squares error or other loss function. An example of a loss function which may be used is:

$$Loss = \sum_{n=1}^{N} \{y(x^n; w) - t^n\}^2$$

Which is expressed in words as, the loss is a sum over the nodes n in the layer, of the square of the difference between the predicted value y output by the node given input to the node $x^n$ and weight w of the node and the ground truth value $t^n$ for the node.

Backward propagation is then computed 606 whereby the loss function is used to inform how weights at the nodes in the neural network layers are to be updated. An optimization is computed in order to determine the adjustments to be made to the weights. This is done for each of the neural network layers during the backpropagation process.

A check is made at operation 608 whether to repeat the process using another training data pair. If the process is to be repeated the method returns to operation 600 and takes another training example from training data 322.

If the process is to end the machine learning model is stored 610 by storing the weights. Successively better models are continually saved to enable a best model to be recovered.

The decision about whether to stop training at operation 608 is made according to one or more criteria such as: a number of training examples which have been used, a time which has elapsed, an amount of change in the weights during a recent backpropagation, an amount of divergence of performance of the training and validation datasets.

Figure 6b shows a flow diagram of an example method of validating a neural network for use in an air data estimator. Validation data 324 is available which is either data created in the process of figure 3 or flight test data, or a combination of these types of data. In the case of flight test data, air data parameter sensors are used on an external surface of the aircraft so as to obtain pairs of ground truth air data parameter values and avionics values.

A validation example 612 is taken. Avionics values from the validation example are taken and input to the neural network input layer after having been normalised. Forward propagation 614 is carried out as described for figure 6A. Forward propagation results in values output at nodes of the output layer which are compared with ground truth values of the validation example. The comparison is made by computing 616 a loss using a loss function such as that described above. The results of the loss function are stored.

A decision is made whether to repeat at decision point 618 and if so another validation example is taken and the process continues from operation 612. If the decision is to not repeat then an accuracy metric is computed at operation 620. The decision whether to repeat at decision point 618 is made using criteria such as a number of validation examples which have been processed.

To compute the accuracy metric at operation 620 a standard deviation, an average, median or mode of the computed losses is calculated.

Once the neural network has been trained and successfully validated it is deployed in an aircraft. Successful validation is where the accuracy metric computed at operation 620 is over a specified threshold.

In order to deploy the neural network in an aircraft resource constraints are to be met, including severe constraints on power, space and time. The neural network is to be low power, that is able to operate without drawing significant amounts of power from the aircraft.

The neural network is to be compact since space in the aircraft is at a premium. The neural network is to be extremely efficient to enable real time operation, that is to be able to predict air data parameters in real time during flight of the aircraft in complex manoeuvres where the air data parameters are expected to change very rapidly. In an example, real time operation means computing a fresh value of the air data parameters around 80 times per second.

The inventors have developed a neural network architecture such as that of figure 5 which facilitates low power, low space and fast operation. Since the neural network of figure 5 has only four layers it is low power, low space and fast in operation. It is also possible to reduce the number of hidden layers 508, 510 from two to one. The inventors have found that such an arrangement gives accurate results and improves compactness and power reduction.

The inventors have unexpectedly found that using a recurrent neural network architecture is unnecessary. As a result a feed forward neural network architecture with fully connected layers and without recurrence is found to give accurate results in an extremely efficient manner. Since a recurrent neural network is not used compactness is facilitated. This reduces the size of the input space as temporal combinations don't need to be examined.

In some embodiments the neural network is deployed using hardware circuitry such as a graphics processing unit or other parallel processing unit. In this case the speed of operation of the neural network is enhanced as compared with deploying the neural network using software.

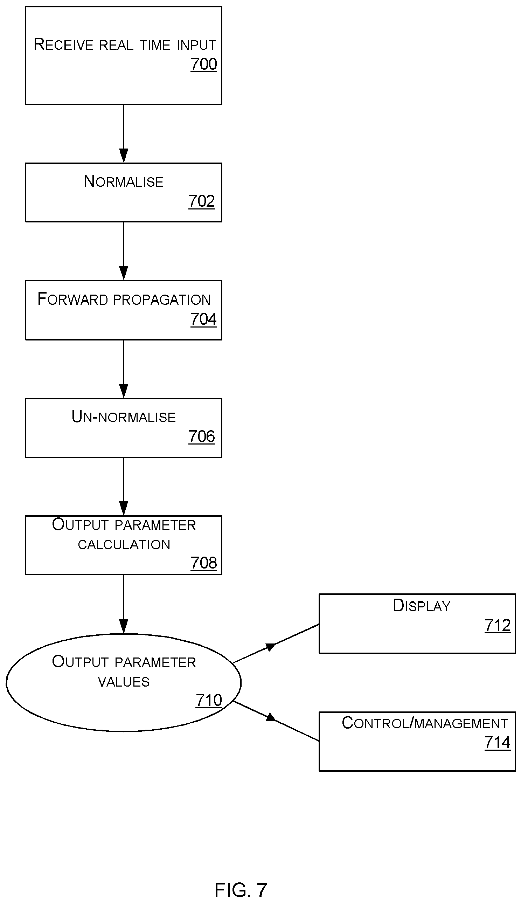

Figure 7 shows a flow diagram of an example method of using an air data estimator 106 which is deployable in an aircraft. The air data estimator 106 comprises a neural network which has been trained using supervised learning. In an example the neural network has been trained as explained with reference to figure 6a and validated as explained with reference to figure 6b. The air data estimator 106 receives 700 real time inputs from avionics in the aircraft. The real time inputs comprise one or more of: engine data such as thrust, static pressure, control plane positions, mass, centre of gravity, attitude, manoeuvre rate, acceleration.

The inputs are normalised 702 by computing a min-max normalization or other normalisation as described above with reference to figure 5. The normalised inputs are input to the input layer of the neural network in the air data estimator and forward propagation 704 is computed as described with reference to figure 6a except that the weights are learnt weights rather than random values.

The result of the forward propagation 704 is output values at the nodes of the output layer 512 of the neural network. The output values at the nodes of the output layer 512 are un-normalised 706 by reversing the normalisation operation from operation 702.

The un-normalised outputs which are predictions of static pressure and dynamic pressure are input to an output parameter calculation 708 which computes altitude and air speed as described above with reference to figure 4.

The air data estimator outputs parameter values 710 which are displayed 712 such as on a display in the cockpit. The parameter values 710 are also provided to control and/or management avionics 714 in the aircraft in order to automatically stabilize the aircraft or for other automation tasks.

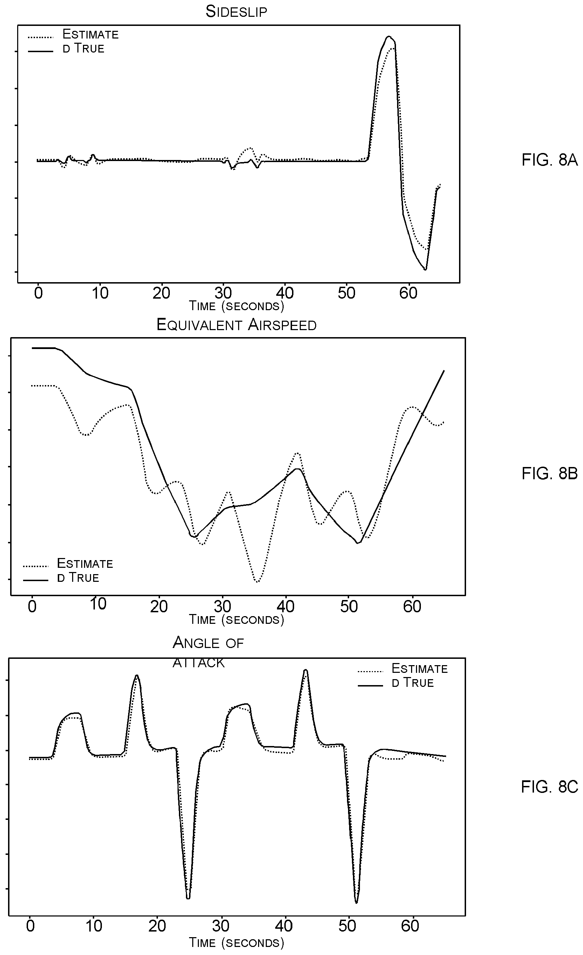

The air data estimator and output parameter calculator have been created and tested. Example test data are given in figures 8a, 8b and 8c. The data shown in figures 8a to 8c was obtained from an air data estimator having a neural network architecture as illustrated in figure 5 and trained using training data computed as described with reference to figure 3. The neural network in the air data estimator was trained and validated as described with reference to figures 6a and 6b and was operated as described with reference to figure 7. The plotted data in figures 8a to 8c compares simulated "truth" manoeuvre predictions with outputs from the air data estimator.

Figure 8a is a graph of angle of side slip estimated by an air data estimator and simulated ground truth angle of sideslip. The x axis of the graph shows time in seconds. The y axis of the graph represents a parameter of a manoeuvre of the aircraft. It is seen that the angle of sideslip which is predicted by the air data estimator matches the ground truth angle of sideslip over the majority of the graph.

Figure 8b is a graph of knots equivalent air speed estimated by an air data estimator and simulated ground truth knots equivalent air speed. It is seen that the knots equivalent airspeed which is predicted by the air data estimator generally follows the ground truth knots equivalent airspeed.

Figure 8c is a graph of angle of attack estimated by an air data estimator and simulated ground truth angle of attack. It is seen that the angle of attack which is predicted by the air data estimator closely matches the ground truth angle of attack over the whole graph.

The computer implemented methods described herein are carried out in any of software/firmware/hardware and using a computing device of any suitable type such as a microprocessor or other processor and optionally using a graphics processing unit or other parallel processing device.

**Claims**

1. An aircraft (100) comprising :

   an air data estimator (106) comprising a machine learning model having been trained to predict air data parameter values from input values;

the air data estimator (106) operable in real time on input values, where the input values are sensor data only from sensors internal to the aircraft (100) or data derived from such sensor data.

2. The aircraft (100) according to claim 1, comprising a flight control system (114) and wherein the input values comprise values from the flight control system.

3. The aircraft (100) according to any one of the preceding claims, comprising a digital engine control unit (108) and wherein the input values comprise engine data from the digital engine control unit (108).

4. The aircraft (100) according to any one of the preceding claims, comprising a vehicle management system (110), and wherein the input values comprise mass and/or centre of gravity of the aircraft determined by the vehicle management system (110).

5. The aircraft (100) according to any one of the preceding claims, comprising a navigation sub system and inertial measurement unit (116), which provides attitude data of the aircraft (100) within the input values and /or manoeuvre rates within the input values.

6. The aircraft (100) according to any one of the preceding claims wherein the air data parameter values comprise static pressure and dynamic pressure and wherein the aircraft (100) comprises an output parameter calculator configured to compute altitude of the aircraft (100) and airspeed of the aircraft from the static pressure and dynamic pressure parameter values predicted by the air data estimator (106).

7. The aircraft (100) according to any preceding claim wherein the machine learning model is a neural network comprising an input layer, an output layer and a maximum of two internal layers.

8. The aircraft (100) according to claim 7 wherein the neural network is a feed forward neural network without recurrence.

9. The aircraft (100) of any preceding claim wherein the machine learning model has been trained using labelled training data computed by randomly selecting values from a flight envelope of the aircraft (100) and using the selected values to simulate the input values.

10. A method performed in an aircraft (100), the method comprising :
using an air data estimator comprising a machine learning model to predict air data parameter values from input values in real time; where the input values are sensor data only from sensors internal to the aircraft (100) or data derived from such sensor data.

11. The method according to claim 10 wherein the input values comprise: engine data, control surface position, static pressure, mass, centre of gravity, attitudes, manoeuvre rates, accelerations.

12. The method according to claim 10 or claim 11 comprising concatenating the input values into a vector and inputting the vector to the machine learning model.

13. The method according to claim 12 comprising normalizing the vector before inputting the vector to the machine learning model.

14. A computer implemented air data estimator (106) comprising a machine learning model to predict air data parameter values from input values in real time; where the input values are from avionics internal to an aircraft (100) such that the aircraft does not need air data sensors mounted on an external surface of the aircraft.

15. A computer-implemented method of training an air data estimator (106) to predict values of air data parameters of an aircraft (100), the method comprising: using supervised training to train a neural network in the air data estimator (106), the supervised training using training data pairs, each training data pair comprising ground truth values of the air data parameters selected from a flight envelope of the aircraft, and corresponding simulated values from avionics in the aircraft, the simulated values computed using stored empirical data about engines of the aircraft (100) and empirical data about the aircraft obtained from wind tunnel testing, and rules of computational fluid dynamics.

120

ATTACK ANGLE 122

SIDE SLIP 124

PRESSURE 126

AIRSPEED/MACH NUMBER 128

AIR DATA ESTIMATOR 106

OUTPUT PARAMETER CALCULATOR 112

AIR DATA PROCESSES 105

DIGITAL ENGINE CONTROL UNIT 108

FLIGHT CONTROL SYSTEM 114

VEHICLE MANAGEMENT SYSTEM 110

NAVIGATION SUB SYSTEM/INERTIAL MEASUREMENT UNIT 116

DISPLAY 118

100

FIG. 1

FIG. 2

EP 4 328 594 A1

SIMULATED DECU 306

FCS 308

SIMULATED STATIC PRESSURE 310

SIMULATED VMS 312

SIMULATED NAV/IMD 314

INPUT SPACE 300

RANDOM SELECTOR 302

CONSTRAINTS 304

SIMULATED VALUES 316

STORED GROUND TRUTH 318

BIAS CORRECTION 320

TRAINING DATA 322

VALIDATION DATA 324

FIG. 3

```
┌─────────┐
│  DECU   │──────────▶
│  108    │
└─────────┘              ┌──────────────┐
                         │              │──────────▶  ┌──────────────┐
┌─────────┐              │   AIR DATA   │             │   OUTPUT     │──────────▶  ALTITUDE   126
│  FCS    │──────────▶   │  ESTIMATOR   │             │  PARAMETER   │
│  114    │              │              │──────────▶  │  CALCULATOR  │──────────▶  AIRSPEED   128
└─────────┘              │    106       │             │      112     │
                         │              │             └──────────────┘
┌─────────┐              │              │
│  VMS    │──────────▶   │              │
│  110    │              │              │──────────▶  ANGLE OF ATTACK   122
└─────────┘              │              │
                         │              │──────────▶  SIDESLIP   124
┌─────────┐              │              │
│ NAV/IMU │──────────▶   │              │
│  116    │              │              │
└─────────┘              └──────────────┘
```

FIG. 4

EP 4 328 594 A1

INPUT VALUES **500** → NORMALISE **502** → CONCATENATE **504** →

OUTPUT LAYER **512**

UN-NORMALISE **514**

520

506  508  510

STATIC PRESSURE **516**

ATTACK ANGLE **122**

SIDESLIP **124**

DYNAMIC PRESSURE **518**

FIG. 5

TRAINING DATA
322

TRAINING EXAMPLE
600

FORWARD PROPAGATION
602

COMPUTE LOSS  604

BACKWARD PROPAGATION
606

REPEAT?
608

Y

N

STORE MACHINE LEARNING MODEL
610

FIG. 6A

VALIDATION DATA/FLIGHT BEST DATA
324

VALIDATION EXAMPLE
612

FORWARD PROPAGATION
614

COMPUTE LOSS AND  616
STORE

REPEAT?
618

Y

N

COMPUTE ACCURACY METRIC  620

FIG. 6B

RECEIVE REAL TIME INPUT
700

↓

NORMALISE
702

↓

FORWARD PROPAGATION
704

↓

UN-NORMALISE
706

↓

OUTPUT PARAMETER
CALCULATION
708

↓

OUTPUT PARAMETER
VALUES
710

DISPLAY
712

CONTROL/MANAGEMENT
714

FIG. 7

SIDESLIP

FIG. 8A

EQUIVALENT AIRSPEED

FIG. 8B

ANGLE OF ATTACK

FIG. 8C

Europäisches
Patentamt

European
Patent Office

Office européen
des brevets

# EUROPEAN SEARCH REPORT

EP 22 27 5117

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHOROMANSKI KRZYSZTOF ET AL: "Learning-based Air Data System for Safe and Efficient Control of Fixed-wing Aerial Vehicles", 2018 IEEE INTERNATIONAL SYMPOSIUM ON SAFETY, SECURITY, AND RESCUE ROBOTICS (SSRR), IEEE, 6 August 2018 (2018-08-06), pages 1-8, XP033405521, DOI: 10.1109/SSRR.2018.8468641 [retrieved on 2018-09-19] * the whole document * ----- | 1-3,5-15 | INV. G01P5/00 G01P13/02 G06N3/02 B64D43/02 G01C23/00 |
| X | US 2020/309810 A1 (CARVALHO ET AL) 1 October 2020 (2020-10-01) * abstract; figures * * paragraphs [0004], [0021] - [0080] * ----- | 1-15 | |

**TECHNICAL FIELDS SEARCHED (IPC)**

G01P
G06N
G01C
B64D

The present search report has been drawn up for all claims

| Place of search | Date of completion of the search | Examiner |
|---|---|---|
| Munich | 10 January 2023 | Barthélemy, Matthieu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 27 5117

This annex lists the patent family members relating to the patent documents cited in the above-mentioned European search report.
The members are as contained in the European Patent Office EDP file on
The European Patent Office is in no way liable for these particulars which are merely given for the purpose of information.

10-01-2023

| Patent document cited in search report | Publication date | Patent family member(s) | Publication date |
|---|---|---|---|
| US 2020309810 A1 | 01-10-2020 | CN 111433612 A | 17-07-2020 |
| | | US 2020309810 A1 | 01-10-2020 |
| | | WO 2019071327 A1 | 18-04-2019 |

EPO FORM P0459

For more details about this annex : see Official Journal of the European Patent Office, No. 12/82